# EUROPEAN PATENT SPECIFICATION

(11) **EP 1 639 208 B1**
(45) Date of publication and mention of the grant of the patent: **10.03.2010**
(21) Application number: 04748977.8
(22) Date of filing: 04.06.2004
(51) Int. Cl.: E04B 1/24, E04B 1/58, F16S 3/06

(54) **SYSTEM FOR JOINING BEAMS WITH SQUARE OR RECTANGULAR CROSS-SECTIONS**
SYSTEM ZUR VERBINDUNG VON TRÄGERN MIT QUADRATISCHEM ODER RECHTECKIGEM QUERSCHNITT
SYSTEME DESTINE A RELIER DES POUTRES A SECTION TRANSVERSALE CARREE OU RECTANGULAIRE

(30) Priority: 06.06.2003 SE 0301662
(43) Date of publication of application: 29.03.2006
(73) Proprietor: Ossbahr, Gilbert, 582 30 Linköping (SE)
(72) Inventor: Ossbahr, Gilbert, 582 30 Linköping (SE)
(74) Representative: Holmberg, Magnus
(86) International application number: PCT/SE2004/000868
(87) International publication number: WO 2004/113634

(56) References cited:
- EP-A2- 0 833 064
- DE-A1- 3 736 266
- DE-U1- 9 201 303
- GB-B- 2 361 504

## Description

### TECHNICAL FIELD

The invention relates to a system for detachable joining of beams with square or rectangular cross-sections in accordance with the preamble of claim 1.

### STATE OF THE ART

Steel beams with square or rectangular cross-sections are common construction elements in high performance static frameworks. In the automotive industry, such beams are used in the foundations of special machines for metal cutting. In the aerospace industry applications are found in jigs for assembling fuselage and wing sections of airplanes. In the processing industry such steel beams are used to support vessels and pipes in specific positions.

Advantageous for said kind of steel beams is:
1. high strength and stiffness relative to their weight
2. smooth surfaces facilitating cleaning.
3. availability on the market in a great number of sizes.
4. relatively low prices.

Disadvantageous for this kind of steel beams is that joints of the beams into frameworks have, until now, not been possible to make with strength values comparable to the capability of the beams, when used in applications where claims also are put on good possibilities of reconstruction and adjustment. It is then a requirement that the fixing devices comply with a combination of properties implying that:
1. they reach a strength comparable with the beams to be joined
2. they are detachable.
3. they are adjustable.
4. they are able to join beams of significantly different dimensions
5. they allow different perpendicular or parallel mounting positions
6. they are preferably available in the shape of cheap standard components in stock

At present, welded joints is the most common type of joints for tubular steel beams. They are of high strength and could be made at relatively low cost. However, they are not detachable and therefore they don't comply with the requirements for reconstruction.

Bolt joints are also common and provide joints of high strength as well. The can be made with bolts through holes in the sides of the beams or through holes in flanges welded to the sides of the beams. The possibility of reconstruction will, however, be heavily restricted by that as a rule new holes have to be drilled for every new mounting position. Thus they don't comply with the requirements for reconstruction.

Friction joints, the field of the present invention, principally result in good possibilities of reconstruction and adjustment. Several successful construction kits for aluminium profiles utilizes friction joints to assemble the parts, which is illustrated in US2001/0025406A1.

In these profiles fixing devices in the shape of for instance anchoring nuts with fastening elements are engaging grooves extending in the longitudinal direction of the profile. The fixing devices can be displaced into optional positions leading to good possibility of reconstruction.

However, the types of friction joints having been developed for joining aluminium profiles cannot be used with steel profiles having square or rectangular cross-section. These profiles are missing the longitudinal grooves where fixing devices can engage. As an alternative for the steel profiles in question friction joints have sometimes been designed with encircling devices that apply force across the cross-section of the beams and thereby create the required friction forces.

Such wholly or partially encircling fixing devices are in some cases formed like yokes that keep steel beams pressed against each other by means of tightening bolts. They are also applied by means of common clamps pressing beams against each other and thereby keeping them interlocked by friction.

The problem with the aforementioned fixing devices is that in the present shape they have large dimensions relative their strength. Therefore in most cases one hasn't been able to provide them with strength values equal to the beams. It hasn't either been possible to give them a general shape to correspond to the demands for variation in applications where possibilities of reconstruction are required. The requirement of connecting a large number of beams of varying dimensions in different mounting positions with a reasonable number of different fixing devices has not been met. For the same reasons keeping prefabricated fixing for this purpose devices in stock hasn't been possible.

### DESCRIPTION OF THE INVENTION

An object with the invention is to solve the problems existing in known solutions for detachable joining of steel beams. This is carried out by a system according to claim 1.

The present invention relates to a modular fixing system for joining steel beams of square or rectangular cross-section for frameworks for supporting functions in machines and other industrial equipment.

Through a combination of locking by friction and locking by shape the fixing system provides a possibility to achieve the strength values corresponding to the requirements in demanding industrial applications. At the same time it gives possibility to detach the joints so that the frameworks can be reconstructed into new structures and also be adjusted to an increased accuracy. Beams of different dimensions and different perpendicular mounting positions can thanks to the modular design according to the thought of the invention be joined into extensive variations of structures for frameworks. By this modular design a reasonable number of different components required in the system can be achieved. In turn this results in that the parts of the fixing system can be manufactured as standard products, whereby the manufacturing cost will be reduced and storing facilitated. The parts can even be stored whereby access for use is achieved at short notice.

The invention is composed of a system of fixing devices for joining beams into frameworks of variable structures for industrial applications. The beams consist of square or rectangular profiles of steel with edge lengths being multiples of a certain module length.

The fixing devices comprises specifically designed fixing plates whose main dimensions constitutes multiples of half the module length. They are mounted in pairs on opposite sides of the beams and are tightened by bolts. The thrust in the bolts provides holding friction forces on the contacting surfaces between the fixing plates and the beams. The holding is further strengthened by stop screws or wedge devices extending from protruding edges or shoulders at the fixing plates and provide a shape determined locking of the beams. Joining locations for beams in frameworks are created by fixing plates at respective beam are put into contact with each other and locked in perpendicular or parallel positions by means of locking elements in the neutral plane between the contacting fixing plates. These locking elements are made of internal threaded sleeves fitting recesses in the fixing plates. At the same time the sleeves provide anchoring of the bolts that tightens the fixing plates to the respective beam.

The invention enables frameworks of high quality to be constructed in variable embodiments by means of a small number of fixing elements of different sizes. They will thereby be of low cost and quickly available for use.

### SHORT DESCRIPTION OF THE FIGURES

- Fig. 1: shows in a perspective view an embodiment of a fixing device in the system according to the invention
- Fig. 2: shows the same fixing device in cross-section
- Fig. 3: shows in a perspective view different embodiments of locking devices
- Fig. 4: shows in a perspective view a first embodiment of a fixing plate
- Fig. 5: shows in a perspective view fixing plates mounted opposite each other
- Fig. 6: shows in a perspective view two beams joined with the system according to the invention
- Fig. 7: shows in a perspective view three beams joined with the system according to the invention
- Fig. 8: shows in a perspective view a framework according to the invention
- Fig. 9: shows alternative embodiments of locking elements
- Fig. 10: shows an alternative of a locking element
- Fig. 11: shows in a perspective view a second embodiment of a fixing plate
- Fig. 12: shows a second embodiment of locking the fixing plate to the beam
- Fig. 13: shows in a top view the second embodiment.

### DESCRIPTION OF EMBODIMENTS

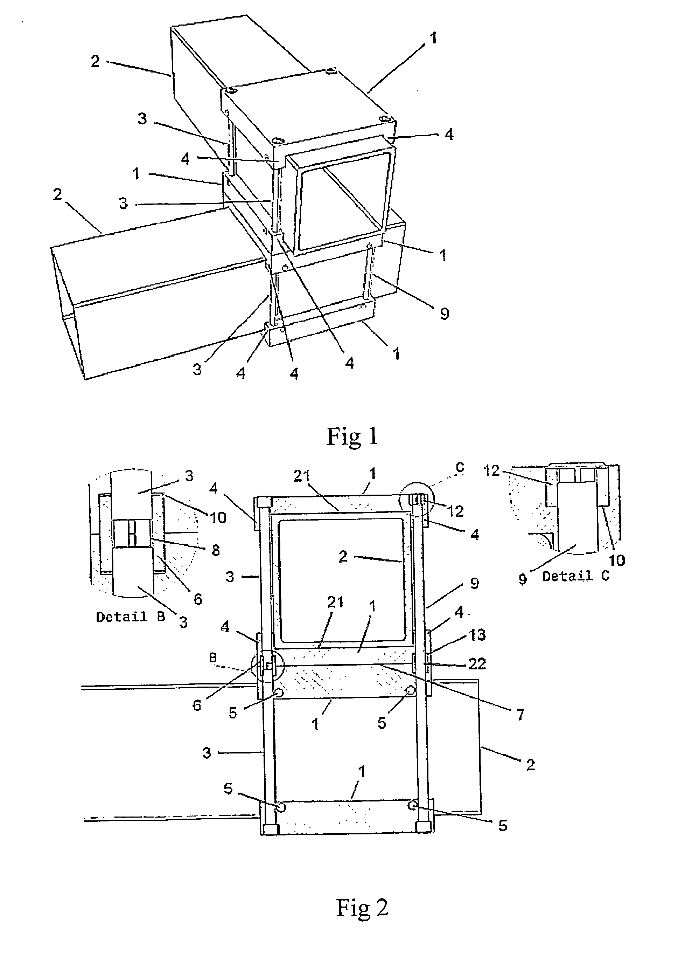

The design of the invention and further advantages are described more in detail below in connection with the figures 1-13.

Fig. 1 illustrates a recommended embodiment of a fixing device in the system according to the invention. Four fixing plates 1 of different kinds are in pairs holding two crossing beams 2, fixed between them by means of tightening bolts 3 and 9. From the sides of the fixing plate longitudinal strips 4 extend in the main directions of the beams.

Fig. 2 illustrates the same montage of the fixing device seen in cross-section. The thrust in the bolts 3 and 9 causes fastening friction forces in the contact surfaces 21 between the fixing plates and the beams. The resistance against side movements is strengthened by stop screws 5, according to a recommended design, extends from de longitudinal strips 4 and provide a shape determined locking of the beams. The stop screws are also used to temporarily keep the fixing plates 1 in position during the mounting. The stop screws 5 are also used to adjust the side position of the fixing plates with respect to the beams.

Fig. 2 further shows how the fixing plates 1, on each side of the beams, can be tightened according to two alternatives. The primary alternative is shown to the left in fig. 2. In this case the tightening bolts 3 engage the threaded sleeves 6 that are common to the two beams 2 and are located at the surfaces 30 opposite to each other of the two adjacent fixing plates. These sleeves 6, shown enlarged in detail B of fig. 2, have internal threads 8 fitting with the bolts 3. The sleeves 6 fits into recesses 10 in the fixing plates and cause that both the adjacent fixing plates 1 shape determined are kept fixed against side movements with respect to each other along the parting line 7.

The secondary alternative for tightening the fixing plates towards each other is illustrated to the right in fig. 2. In this case longer tightening bolts 9 are used, which extends through the whole joint and tighten it. These bolts are anchored in threaded sleeves 12, which are shown enlarged in Detail C in fig. 2 and, which similar to the sleeves 6, fit into the recesses 10 in the fixing plate. In the recesses 10 in the surfaces 30 opposite to each other in the adjacent fixing plates 1 sleeves 13 are used that similar to the sleeves 6 fits into the recesses 10 but have clearance holes 22 without any thread. These sleeves 13 thereby hold both fixing plates 1 shape determined fixed against side movements along the parting line 7.

Through the secondary joining alternative mounting of beam joints on locations accessible from only one direction is enabled. It also enables that by means of further lengthened bolts joint corners with three or more joined beams can be constructed.

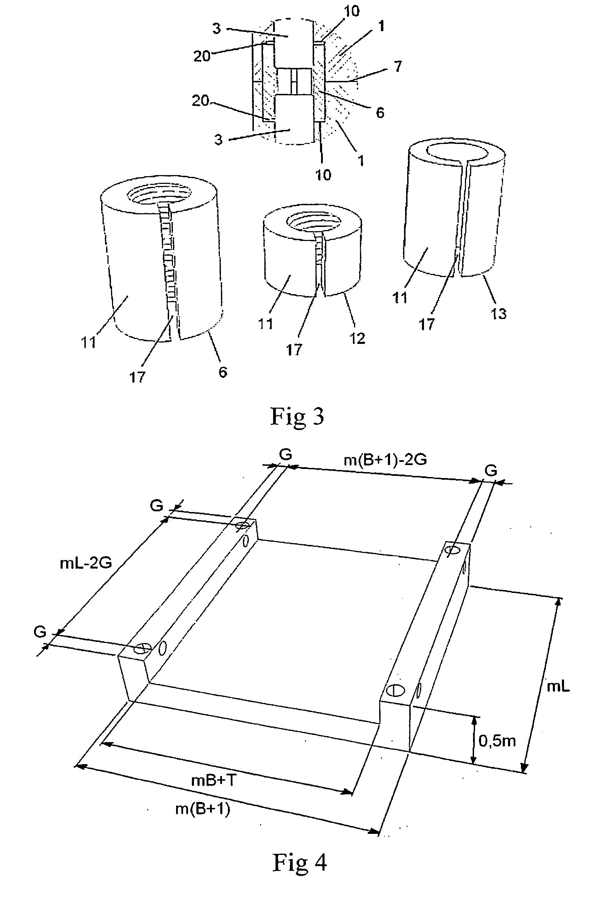

Fig. 3 illustrates, more in detail how the sleeves 6, 12 and 13 according to the recommended alternative are designed. They have a cylindrical outer surface 11 and a longitudinal slot 17 to absorb the minor differences in positions and diameters that can exist between the sleeves and their connecting recesses in the fixing plates. The sleeves can of course be designed without a longitudinal slot, which then requires higher accuracy in manufacturing the parts but instead lead to improved stiffness and strength in the joint.

The length of the sleeves 6 and 13 are in the recommended design somewhat shorter than the added up depths of the recesses 10, where they are located. A minor axial play 20 is thus created at the end surfaces 31 of the sleeves 6 and 13 with respect to the bottom surface 32 of the recesses 10. The resisting force to the tightening force in the bolts 3 or 9 will thus in the recommended embodiment of the invention not pass through the sleeves 6 and 13. Instead it passes over the outer surfaces 30 of the adjacent fixing plates and makes these surfaces contacting each other in the parting plane 7. Thereby the position of the beams 2 with respect to their mutual distance is determined by the thickness of the fixing plates. Friction forces are created between the two outer surfaces 30, which contribute to the strength of the joint.

The components of the fixing system are comprised in a superior modular system that increases the possibilities of combinations and reduces the number of varieties of components in the system. This modular system has a common module length m, which in practice can be an even dimension, for instance 50 mm. The width of the beams and a height should be multiples of the chosen module length m and can then be expressed as m*B respective m*H.

Fig. 4 shows the nominal dimensions for a fixing plate being designed in accordance with the rules of the modular system. The width of the plate is m*(B+1) and its length is likewise a multiple of L of the module length, i.e. it has the length m*L. It is evident that the holes for the joining bolts 3 or 9 lies with a distance that in breadth can be expressed with the formula m*(B+1)-2*G, where G is the distance from the centre of the holes to the edge of the plate. The distance between the holes in the longitudinal direction can in a corresponding way be expressed with m*L-2*G.

From fig. 4 is also evident that the nominal material thickness of the plate is m*0,5 and that the distance between the two strips 4 is m*B+T. The distance T is a small play enabling that fixing plates can be mounted at the beams even when these have certain overdimensions with respect to the nominal dimensions. The play T also enables certain minor sideward position displacements of the fixing plates by means of the stop screws 5.

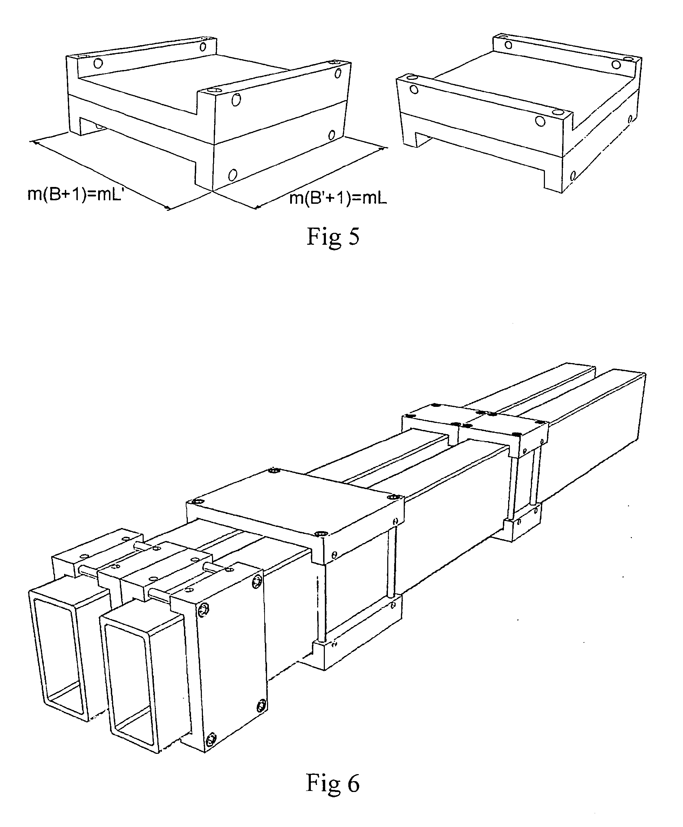

Fig. 5 shows how to combine two crossed beam sizes, the one with the width m*B and the other with the width m*B'. This is enabled by that the length of the first plate, which according to the module system can be written m*L, is chosen to fit with the width of the other plate, i.e. m*(B'+1). In the same way the length of the other plate is chosen, which can be written m*L' to the width of the first plate m*B(B+1). The distance between the holes in the length direction for the first plate can then be expressed with the formula m*(B'+1)-2*G, which is the same formula that gives the distance between holes in breadth for the other plate. With the principle of the modular system the two contacting plates thus get coincident (coaxial) hole positions to enable fixing plates from the series of dimensions in the modular system to crate crossing points, where de tightening bolts 3, 9 and accompanying guiding sleeves have a common hole pattern determined by the module. Thereby the number of variants of fixing elements is reduced compared to what had been required without module determined series of dimensions and without the described uniform rule for the hole pattern and the dimensions of the fixing plates.

Fig. 6 illustrates how the fixing plates according to the modular system can be located so that beams are held in parallel positions at a distance of one module and how fixing plates of larger sizes can be combined to join the beams in another main direction. Through these different ways of mounting the combinations can be extended without increasing the number of components in the modular fixing system.

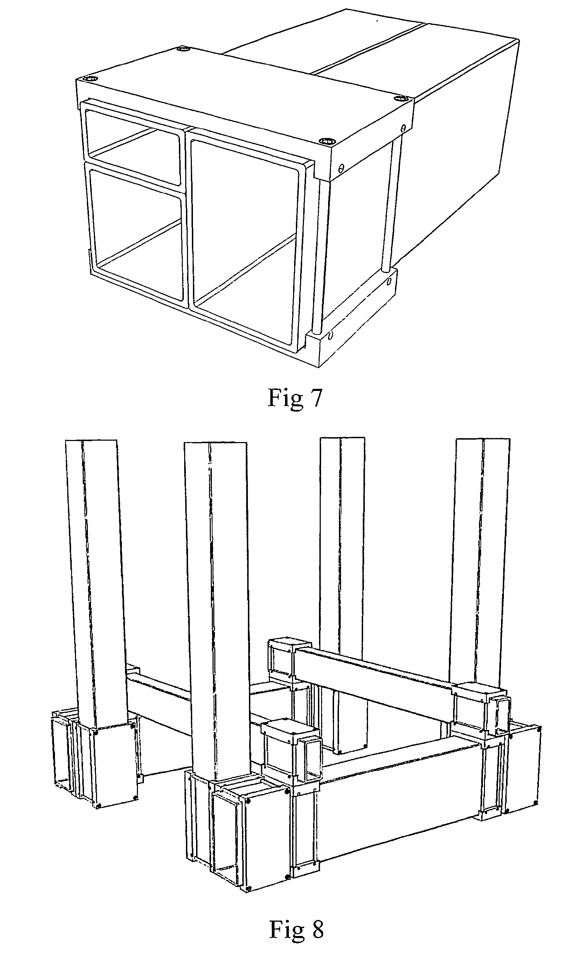

Fig. 7 shows how more small beams according to the dimension series, when necessary can be put close to each other to provide increased stiffness and strength.

Fig. 8 shows in an overview further examples of how the fixing system can be used to combine beams of different sizes according to the rules of the modular system for frameworks according to specific needs.

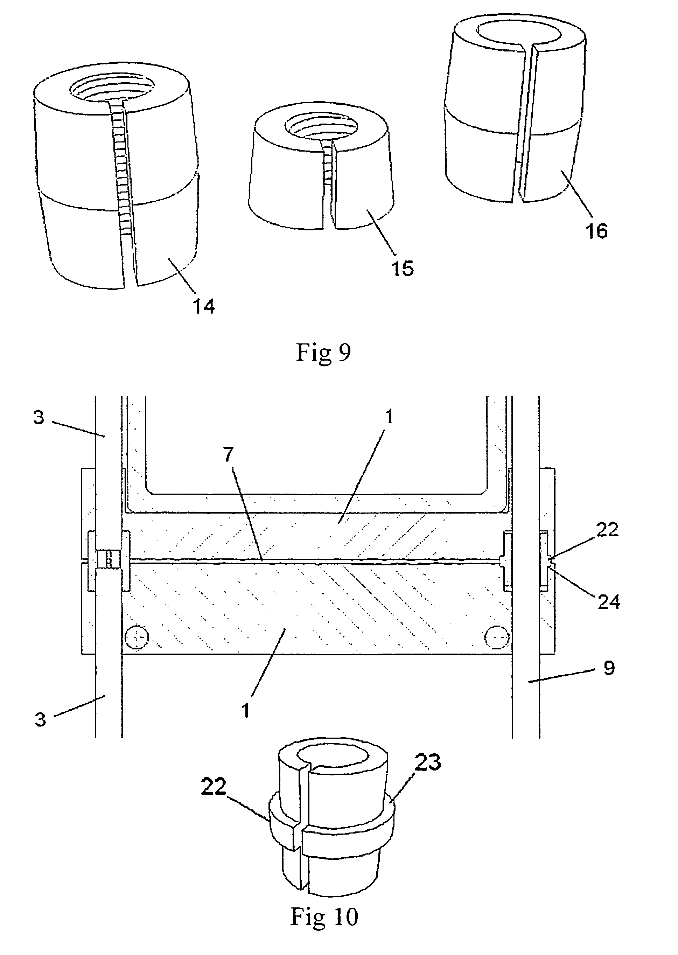

Fig. 9 illustrates a variant of the modular fixing system where the sleeves in fig. 3, 6, 12 and 13 are provided with a somewhat conical outer surface 14, 15 and 16. This conical shape is of interest to simplify detachment of mounted joints. Connecting recesses 10 in the fixing plates should then be conical too.

Fig. 10 illustrates an alternative embodiment of the modular fixing system that is obtained when the sleeves 6 and 13 are designed to not only keep the fixing plates located opposite to each other fixed against mutual side movements along the parting line 7, but also keep their positions fixed perpendicular to this parting line. An embodiment according to this alternative is shown to the left in figure 10. The cylindrical sleeves 6 and 13 are here made so much longer that the axial play 20 is eliminated. At the same time the thickness of the material in the fixing plates is made smaller. A contact between end surfaces 31 at the sleeves 6, 13 and the bottom surfaces 32 in the recesses 10 then arises. At the same time a play arises between surfaces 30 on the adjacent fixing plates at the parting line 7. This design has advantages in those cases when for strength reasons a smaller material thickness of the plates can be accepted and at the same time, for cost reasons, the requirements of flatness of the outer surfaces 30 of the plates along the parting line 7 can be reduced.

Another design of the sleeves 6 and 13 that by the sleeves themselves gives a certain distance between the adjacent fixing plates is illustrated to the left in fig. 10. Here the sleeves are provided with a central brim 22 with oppositely directed shoulders 23, which acts against machined land surfaces 24 on the fixing plates 1. This embodiment could have advantages from the manufacturing point of view.

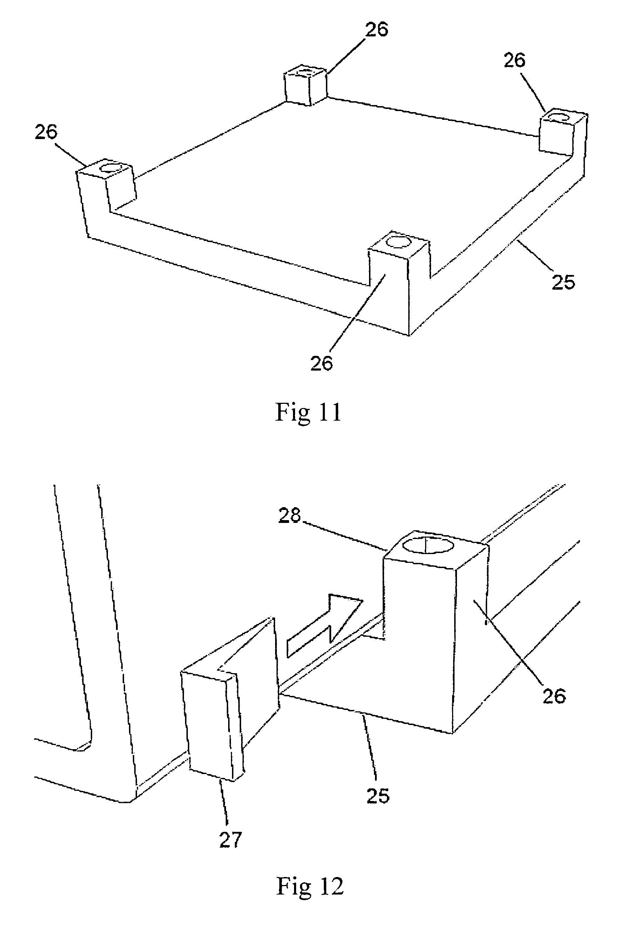

Fig. 11 shows a variant 25 of the fixing plate 1, which instead of longitudinal strings 4 has corner projections 26 with a corresponding function. This embodiment enables each non square fixing plate according to the modular system to be used for two different beam sizes.

The number of different fixing plates for covering of the size alternatives in crossing points for beams will thereby be further reduced.

However, the space available for mounting stop screws for shape determined fixing at side forces of the kind described in connection with fig. 2 would be smaller. Stop screws 5, essentially for fixation during mounting of the joint can as well be placed as illustrated at the projections 26 in fig. 11.

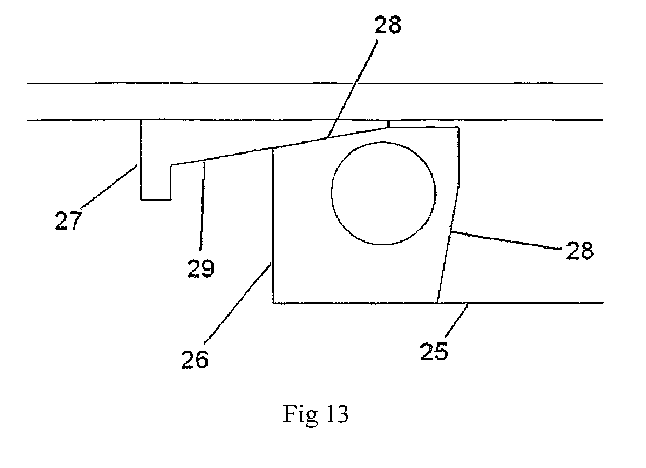

Fig. 12 and 13 illustrates an alternative to the stop screws 5 in the form of wedges 27 that are pressed down against chamfered surfaces 28 at the corner projections 26 or, in a similar manner at the strings 4 illustrated in fig. 1. These wedges can be knocked or pressed to a suitable depth by means of specific tools and can also be detached with specific tools.

Within the scope of the invention there is a possibility to press down the wedges from other directions than the one illustrated in fig. 12, which in certain cases has advantages from the accessibility point of view.

## Claims

1. System for detachable joining of beams (2) with square and/or rectangular cross-section for respective beam comprising two or more fixing plates (1) mounted in pairs on opposite sides of the beam and fixed along the beam by a friction joint maintained by tightening bolts (3, 9), whereby respective fixing plate comprises a first surface (21), the extension of which in at least one direction corresponds to a multiple of one beam width and a second surface (30) turned away from the beam, **characterised in that** two or more beams are arranged to be joined in perpendicular and/or parallel directions by at least two opposite to each other arranged fixing plates (2), which are organized to bear on each other along the respective second surface (30) and whose mutual positions are fixed by locking elements (6, 13) in recessions (10) in the each other facing sides (30) of the fixing plates and which locking elements also constitute anchoring of the tightening bolts.

2. System according to claim 1, whereby the locking elements are made of inner threaded sleeves (6).

3. System according to claim 2, whereby the fixing plate comprises projections (26) arranged at respective corner of the plate.

4. System according to claim 3, whereby stop screws (5), extending from the projections (26) are arranged to fix the position of the beams in a transverse direction in the friction joint, whereby a shape determined locking of the beams is achieved.

5. System according to claim 3, whereby wedges (27), extending from the projections (26) are arranged to fix the position of the beams in a transverse direction in the friction joint, whereby a shape determined locking of the beams is achieved.

6. System according to any of the claims 2-5, whereby the sleeves (6, 12, 13) have longitudinal slots (17).

7. System according to any of the proceeding claims, whereby the beams (2) are tubular beams.

## Patentansprüche

1. System zum lösbaren Verbinden von Trägern (2) mit quadratischem und/oder rechteckigem Querschnitt für einen jeweiligen Träger, mit zwei oder mehreren Befestigungsplatten (1), die in Paaren auf gegenüberliegenden Seiten des Trägers angebracht sind und entlang des Trägers durch eine Reibungsverbindung befestigt sind, die durch Spannschrauben (3, 9) aufrechterhalten wird, wobei eine jeweilige Befestigungsplatte eine erste Oberfläche (21) umfasst, deren Ausdehnung in zumindest einer Richtung einer Vielzahl von einer Trägerbreite entspricht, und eine zweite Oberfläche (30), die von dem Träger abgewandt ist,
**dadurch gekennzeichnet, dass** zwei oder mehr Träger angeordnet sind, um in senkrechten und/oder parallelen Richtungen durch zumindest zwei einander gegenüberliegend angeordnete Befestigungsplatten (2) verbunden zu werden, die ausgerichtet sind, um aufeinander entlang der jeweiligen zweiten Oberfläche (30) aufzuliegen, und deren wechselseitige Positionen durch Verriegelungselemente (6, 13) in Vertiefungen (10) in den einander zugewandten Seiten (30) der Befestigungsplatten fixiert sind, und wobei diese Verriegelungselemente auch eine Verankerung der Spannschrauben bilden.

2. System gemäß Anspruch 1, wobei die Verriegelungselemente aus Hülsen (6) mit Innengewinde hergestellt sind.

3. System gemäß Anspruch 2, wobei die Befestigungsplatte Vorsprünge (26) umfasst, die an einer jeweiligen Ecke der Platte angeordnet sind.

4. System gemäß Anspruch 3, wobei Anschlagschrauben (5), die sich von den Vorsprüngen (26) erstrecken, angeordnet sind, um die Position der Träger in einer transversalen Richtung in der Reibungsverbindung zu fixieren, wodurch eine formbestimmte Verriegelung der Träger erreicht wird.

5. System gemäß Anspruch 3, wobei Keile (27), die sich von den Vorsprüngen (26) erstrecken, angeordnet sind, um die Position der Träger in einer transversalen Richtung in der Reibungsverbindung zu fixieren, wodurch eine formbestimmte Verriegelung der Träger erreicht wird.

6. System gemäß einem der Ansprüche 2 bis 5, wobei die Hülsen (6, 12, 13) Längsschlitze (17) aufweisen.

7. System gemäß einem der vorangehenden Ansprüche, wobei die Träger (2) rohrförmige Träger sind.

## Revendications

1. Système destiné à relier de manière amovible des poutres (2) qui présentent une section transversale carrée et /ou rectangulaire, la poutre respective comprenant deux plaques de fixation (1) ou plus montées par paires sur les côtés opposés de la poutre et fixées le long de la poutre par un joint par friction maintenu au moyen de boulons de serrage (3, 9), grâce à quoi la plaque de fixation respective comprend une première surface (21), dont l'extension dans au moins une direction correspond à un multiple d'une largeur de poutre, et une deuxième surface (30) tournée en s'éloignant de la poutre, **caractérisé en ce que** deux poutres ou plus sont disposées de manière à être reliées dans des directions perpendiculaires et /ou parallèles par au moins deux plaques de fixation (2) disposées à l'opposé l'une de l'autre, lesquelles sont organisées de manière à porter l'une sur l'autre le long de la deuxième surface respective (30) et dont les positions mutuelles sont fixées par des éléments de verrouillage (6, 13) dans des retraits (10) disposés dans les côtés (30) qui se font face les uns aux autres des plaques de fixation, lesquels éléments de verrouillage constituent également un moyen d'ancrage des boulons de serrage.

2. Système selon la revendication 1, dans lequel les éléments de verrouillage sont constitués de manchons filetés à l'intérieur (6).

3. Système selon la revendication 2, dans lequel la plaque de fixation comprend des saillies (26) disposées au niveau des coins respectifs de la plaque.

4. Système selon la revendication 3, dans lequel des vis d'arrêt (5), qui s'étendent à partir des saillies (26), sont disposées de manière à fixer la position des poutres dans une direction transversale dans le joint par friction, grâce à quoi on obtient un verrouillage des poutres déterminé par la forme.

5. Système selon la revendication 3, dans lequel des coins (27), qui s'étendent à partir des saillies (26), sont disposées de manière à fixer la position des poutres dans une direction transversale dans le joint par friction, grâce à quoi on obtient un verrouillage des poutres déterminé par la forme.

6. Système selon l'une quelconque des revendications 2 à 5, dans lequel les manchons (6, 12, 13) présentent des fentes longitudinales (17).

7. Système selon l'une quelconque des revendications précédentes, dans lequel les poutres (2) sont des poutres tubulaires.
